# EUROPÄISCHE PATENTSCHRIFT

(11) **EP 2 271 417 B1**
(45) Veröffentlichungstag und Bekanntmachung des Hinweises auf die Patenterteilung: **12.02.2014**
(21) Anmeldenummer: 09742007.9
(22) Anmeldetag: 29.04.2009
(51) Int. Cl.: F01N 3/10, F01N 3/20, F01N 13/02, F01N 3/035, F01N 3/022, B01D 46/24

(54) **PARTIKELFILTER MIT HYDROLYSEBESCHICHTUNG**
PARTICLE FILTER COMPRISING A HYDROLYSING COATING
FILTRE À PARTICULES À REVÊTEMENT HYDROLYSANT

(30) Priorität: 09.05.2008 DE 102008022990
(43) Veröffentlichungstag der Anmeldung: 12.01.2011
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2009/055167
(87) Internationale Veröffentlichungsnummer: WO 2009/135789

(56) Entgegenhaltungen:
- EP-A- 1 153 648
- WO-A-97/01387
- DE-A1-102005 012 066
- DE-A1-102007 006 625

## Beschreibung

Die vorliegende Erfindung betrifft einen Partikelfilter mit aus porösen Wänden gebildeten Kanälen, die zwischen einer ersten Stirnseite und einer zweiten Stirnseite des Partikelfilters verlaufen. Solche Partikelfilter finden insbesondere Einsatz in Abgassystemen mobiler Verbrennungskraftmaschinen, wie beispielsweise in Kraftfahrzeugen.

Der hier benannte Partikelfilter ist insbesondere aus einer porösen, gegebenenfalls extrudierten, Struktur gebildet, beispielsweise nach Art einer Wabenstruktur. Die Form dieser Wabenstruktur unterliegt keinen besonderen Einschränkungen. Als äußere Querschnittsform der Wabenstruktur kann jedoch beispielsweise ein Kreis, eine Ellipse und ein Oval dienen. Die Form der Kanäle unterliegt ebenfalls keinen Einschränkungen, jedoch ist eine eckige Querschnittsform regelmäßig bevorzugt, beispielsweise nach Art eines Dreiecks, eines Vierecks, eines Sechsecks oder dergleichen. Die Zelldichte für die Kanäle kann ebenfalls in weiten Grenzen variiert werden, bevorzugt ist beispielsweise die Gestalt mit einer Kanaldichte im Bereich von 7,8 bis 62 Zellen pro Quadratzentimeter (50 bis 400 Zellen pro Quadratinch). Die porösen Wände können dabei beispielsweise mit Keramik gebildet sein. Hierbei hat sich beispielsweise Siliciumcarbit oder Metallsilicium und Siliciumcarbit als geeignet erwiesen. Wenn die Keramik als Hauptkristallphase ein Metallsilicium und Siliciumcarbit aufweist, beträgt der durch Si (Si + SiC) definierte Si-Gehalt vorzugsweise 5 bis 50 Massenanteile in %, bevorzugt 10 bis 40 Massenanteile in %.

Solche Partikelfilter werden regelmäßig als "Wall-Flow-Filter" bezeichnet, weil sie zumindest einen Großteil des Abgasstromes durch die porösen Wände zwingen. Zu diesem Zweck ist bekannt, die benachbart angeordneten Kanäle des Partikelfilters wechselseitig an den beiden Stirnseiten zu verschließen, so dass ein Teilabgasstrom in einen ersten Kanal, der an der Eintrittsseite offen ist, einströmen kann, durch den Verschluss am Ende dieses Kanals durch die poröse Wand hin zu einem benachbarten Kanal gezwungen wird und dort hinausströmen kann. Beim Durchströmen der porösen Wände können auch im Abgas mitgeführte Partikel eingelagert und gegebenenfalls reduziert bzw. in gasförmige Bestandteile umgesetzt werden.

Solche Partikelfilter mit porösen Wänden weisen regelmäßig eine besonders große innere Oberfläche auf, so dass hier auf einem relativ kleinen Bauvolumen bei einer entsprechenden Beschichtung eine sehr große katalytisch aktive Fläche bereitgestellt werden kann. Deshalb wird der Einsatz solcher Partikelfilter bevorzugt auch in Kombination mit einem SCR-System vorgeschlagen. Bei der selektiven katalytischen Reduktion (SCR von Stickoxiden in Abgasen) werden bevorzugt die Stickoxide (NO, NO₂) reduziert, während unerwünschte Nebenreaktionen (wie z. B. die Oxidation von Schwefeloxid zu Schwefeltrioxid) weitgehend unterdrückt werden. Zum Ablauf dieser Reaktion wird regelmäßig Ammoniak (NH₃) eingesetzt, welches dem Abgas zugemischt wird. Die Produkte der Reaktion sind Wasser (H₂O) und Stickstoff (N₂). Geeignete Katalysatoren, die hier zum Einsatz gelangen, sind beispielsweise Titandioxid, Vanadiumpentoxid und/oder Wolframoxid. Auch der Einsatz von Zeolithen ist möglich. Das SCR-Verfahren wird insbesondere bei Dieselfahrzeugen, vor allem bei Nutzfahrzeugen, eingesetzt, um die Schadstoffemissionen bezüglich der Stickoxidbelastungen zu senken.

Die bislang vorgeschlagenen Systeme zur Partikelreduktion auf der einen Seite und der Stickoxidreduktion auf der anderen Seite sind zum Teil sehr komplex aufgebaut und benötigen viel Bauraum. Außerdem ist es für einige Systeme erforderlich, dass eine aufwendige Konditionierung des Reduktionsmittels (beispielsweise Harnstoff oder dergleichen) abgasextern und/oder im Abgassystem selbst erfolgen muss, wobei eine vollständige Umsetzung teilweise nicht gewährleistet werden kann. Deshalb wird vielfach auch die Bereitstellung eines so genannten Sperr-Katalysators vorgeschlagen, der einen Durchbruch von Stickoxiden bei einer unzureichenden Umwandlung des Reduktionsmittels verhindern soll.

Zur Einsparung von Bauraum wird in der EP 1 153 648 A1 ein Katalysatorsystem vorgeschlagen, das eine Reduktionsmitteleindüsung sowie einen Katalysatorkörper mit einer Eintrittsstirnfläche und einer Austrittsstirnfläche aufweist, wobei auf dem Katalysatorkörper sowohl eine Hydrolysebeschichtung, bevorzugt nur im Eintrittsbereich, als auch eine Reduktionsbeschichtung für die selektive katalytische Reduktion von Stickoxid vorgesehen sind. Hierbei kann allerdings nicht gewährleistet werden, dass es zu einer vollständigen Umsetzung des eingedüsten Reduktionsmittelvorläufers kommt.

Hiervon ausgehend ist es Aufgabe der vorliegenden Erfindung, die mit Bezug auf den Stand der Technik geschilderten Probleme zumindest teilweise zu lösen. Insbesondere soll ein Partikelfilter angegeben werden, der gerade in SCR-Systemen Vorteile hinsichtlich der vollständigen Umsetzung der SCR-Reaktionen bzw. der Hydrolyse von Reduktionsmittel ermöglicht. Zudem soll eine entsprechende Vorrichtung zur Verwirklichung des SCR-Verfahrens in Kraftfahrzeugen vorgeschlagen werden, die kompakt und einfach aufgebaut ist.

Diese Aufgaben werden gelöst mit einem Partikelfilter gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können, und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele der Erfindung an, die als bevorzugt angesehen werden.

Der erfindungsgemäße Partikelfilter wird aus porösen Wänden bildende Kanäle, die zwischen einer ersten Stirnseite und einer zweiten Stirnseite des Partikelfilters verlaufen, gebildet und zeichnet sich dadurch aus, dass die erste Stirnseite außerhalb der Kanäle eine Hydrolysebeschichtung aufweist.

Die Hydrolysebeschichtung umfasst bevorzugt Titandioxid als wichtigste (oder sogar einzige) Aktivkomponente, so dass insbesondere ein geringes Ammoniak-Speichervolumen vorliegt. Gegebenenfalls können aber auch Titanoxid-getragene Wolframdioxid- und Vanadium-Wolframoxid-Katalysatoren eingesetzt werden. Diese Beschichtung hat insbesondere die Eigenschaft, ein Harnstoff umfassendes Reduktionsmittel zusammen mit heißem Abgas und Wasser hin zu Ammoniak (und Isocyansäure) umzuwandeln, also zu hydrolysieren. Dabei wird hier (nur) die erste Stirnseite (auch) außerhalb der Kanäle mit einer Hydrolysebeschichtung versehen. Die erste Stirnseite betrifft dabei im Wesentlichen die Fläche, die man bei einer Draufsicht der ersten Stirnseite erkennt, die also insbesondere außerhalb der Kanäle positioniert ist. Gerade bei solchen Partikelfiltern mit porösen Wänden ist die erste Stirnseite, die vom Abgas angeströmt wird, relativ groß. Außerdem ist zu berücksichtigen, dass diese erste Stirnseite gegebenenfalls als Aufprallfläche für das Reduktionsmittel dient. Um hierbei nun eine möglichst vollständige Umsetzung des Reduktionsmittels zu realisieren, ist gerade in dem Bereich der ersten Stirnseite außen eine Hydrolysebeschichtung vorgesehen. Beim Auftreffen des beispielsweise flüssigen Reduktionsmittels und dem anschließenden Kontakt mit dem heißen Abgas erfolgt eine möglichst umfassende Umsetzung zu Ammoniak, so dass nachfolgend im Inneren des Partikelfilters gegebenenfalls eine vollständige SCR-Reaktion stattfindet. Selbstverständlich kann diese Hydrolysebeschichtung auch noch in den offenen und/oder verschlossenen Kanal hineinragend ausgebildet sein, so zum Beispiel über die Länge der Verschlussmittel (10 - 40 mm), so dass ggf. eine Beschichtung durch stirnseitiges Eintauchen einfach herstellbar ist.

Dabei ist bevorzugt, dass an der ersten Stirnseite erste Verschlussmittel für Kanäle vorgesehen sind, die mit einer Frontfläche einen Teil der ersten Stirnseite des Partikelfilters bilden, und die Frontflächen mit einer Hydrolysebeschichtung ausgeführt sind. Die Verschlussmittel sind beispielsweise Stopfen, die im Bereich der ersten Stirnseite des Partikelfilters positioniert sind, um einen Teil der Kanäle an dieser ersten Stirnseite zu verschließen. Die Frontflächen dieser, sich gegebenenfalls teilweise in die Kanäle hinein erstreckenden, ersten Verschlussmittel weisen dabei nach außen und können insbesondere beim späteren Einsatz vom Abgas angeströmt werden. Gerade in diesem Fall ist somit also mehr als 50 % der gesamten Stirnfläche des Partikelfilters (Stirnseite plus Kanäle) mit einer Hydrolysebeschichtung ausgeführt.

Des Weiteren wird auch vorgeschlagen, dass an der zweiten Stirnseite zweite Verschlussmittel für Kanäle vorgesehen sind, die mit einer Grundfläche Kanäle begrenzen, und die Grundflächen mit einer Hydrolysebeschichtung ausgeführt sind. Diese zweiten Verschlussmittel, die regelmäßig in den Kanälen positioniert sind, in denen keine ersten Verschlussmittel vorgesehen sind, sind zumeist bündig an der zweiten Stirnseite positioniert. Diese zweiten Verschlussmittel bilden nun eine Grundfläche, wobei diese zumeist im Inneren der Kanäle positioniert ist. Die Grundflächen der zweiten Verschlussmittel weisen dabei regelmäßig in die gleiche Richtung wie die Frontflächen der ersten Verschlussmittel. Damit können auch sie als Aufprallfläche für Reduktionsmittel und/oder das Abgas dienen. So wird hier vorgeschlagen, ebenfalls eine Hydrolysebeschichtung vorzusehen, so dass die Reduktionsmitteltropfen, die gerade durch einen solchen Kanal hindurch fliegen, hier auftreffen und hydrolysiert werden.

Gemäß einer Weiterbildung wird vorgeschlagen, dass der Partikelfilter Kanäle einer vorgegebenen Länge aufweist, wobei die Kanäle auf einem ersten Abschnitt der Länge mit einer Hydrolysebeschichtung ausgeführt sind, und sich der erste Abschnitt bis an die zweite Stirnseite des Partikelfilters hin erstreckt. Damit ist also insbesondere der stromabwärts angeordnete Abschnitt der Kanäle mit einer Hydrolysebeschichtung ausgeführt. Insbesondere erstreckt sich dieser erste Abschnitt bis an die Grundflächen der zweiten Verschlussmittel. Der erste Abschnitt liegt bevorzugt im Bereich von 10% bis 70% der Länge der Kanäle.

Darüber hinaus wird auch als vorteilhaft angesehen, dass die Kanäle eine Länge aufweisen, wobei die Kanäle auf einem zweiten Abschnitt der Länge mit einer SCR-Beschichtung ausgeführt sind, und der zweite Abschnitt zwischen der ersten Stirnseite und der zweiten Stirnseite des Partikelfilters angeordnet ist. Das heißt mit anderen Worten insbesondere, dass die SCR-Beschichtung mit deutlichem Abstand hin zur ersten Stirnseite und zur zweiten Stirnseite des Partikelfilters positioniert ist. Dies betrifft insbesondere den Fall, wenn eine SCR-Beschichtung in den Kanälen realisiert ist, die keine ersten Verschlussmittel an der ersten Stirnseite aufweisen. Nur der Vollständigkeit halber sei darauf hingewiesen, dass diese Kanäle auch ohne eine SCR-Beschichtung auskommen können, also insbesondere auch unbeschichtete Abschnitte aufweisen können. Eine SCR-Beschichtung über einen zweiten Abschnitt ist jedoch bevorzugt (nur) in jedem Kanal vorzusehen, der an der zweiten Stirnseite keine zweiten Verschlussmittel aufweist. Diese können allerdings über die gesamte Länge eine SCR-Beschichtung aufweisen. Eine SCR-Beschichtung weist eine gegenüber einer Hydrolysebeschichtung erhöhte Ammoniak-Speicherfähigkeit auf, insbesondere weil zusätzliche Komponenten wie Vanadiumpentoxid und/oder Zeolythe vorgesehen sind.

Für den eingangs geschilderten Fall, aber insbesondere für den vorstehenden Fall, dass in Kanälen, die keine ersten Verschlussmittel an der ersten Stirnseite aufweisen, eine SCR-Beschichtung in einem zweiten Abschnitt vorgesehen ist, ist bevorzugt, dass diese Kanäle auf einem dritten Abschnitt der Länge mit einer Hydrolysebeschichtung ausgeführt sind, und sich der dritte Abschnitt bis an die erste Stirnseite des Partikelfilters hin erstreckt. Damit ist praktisch ein Eintrittsbereich der Kanäle im Anschluss an die erste Stirnseite ebenfalls mit einer Hydrolysebeschichtung ausgeführt. Diese kann dann insbesondere als Aufprallfläche für Reduktionsmittel dienen, wenn ein schräges Auftreffen des Reduktionsmittels nahe der ersten Stirnseite realisiert ist.

Gemäß einer Weiterbildung wird vorgeschlagen, dass wenigstens ein Teil der Kanäle zumindest teilweise gekrümmt oder mit in die Kanäle hinein ragenden Strukturen versehen ist. Ein "gekrümmter" Verlauf meint insbesondere eine Wellform der porösen Wände, so dass beispielsweise ein mäanderförmiger Kanalverlauf gegeben ist. Gleichermaßen können auch schraubenlinienförmige Kanäle ausgebildet sein. Des Weiteren ist möglich, gegebenenfalls zusätzlich, in die Kanäle hineinragende Strukturen auszubilden. Diese können nach Art von Leitflächen, Kanalverengungen oder dergleichen ausgeführt sein.

Außerdem kann eine oxidierende Beschichtung im Austrittsbereich der Kanäle vorgesehen sein, die hin zur zweiten Stirnseite offen sind. Eine solche oxidierende Beschichtung umfasst insbesondere Platin und erfasst bevorzugt den Bereich (z.B. 10 - 40 mm) der vom Abgas zuletzt kontaktiert wird, bevor dieses den Partikelfilter verlässt.

Darüber hinaus wird eine Vorrichtung mit zumindest einer Abgasleitung, in der ein Abgas in einer Strömungsrichtung hindurchströmen kann, als vorteilhaft angesehen, wobei weiter eine Düse zur Einleitung von Ammoniak umfassendem oder bildendem Reduktionsmittel und ein Partikelfilter der erfindungsgemäßen Art vorgesehen sind, wobei die erste Stirnseite des Partikelfilters hin zur Düse ausgerichtet ist. Bei der Düse handelt es sich insbesondere um eine Düse mit der flüssiges Reduktionsmittel eingespritzt werden kann. Das Reduktionsmittel kann selbst Ammoniak umfassen, es ist aber auch möglich, dass das Reduktionsmittel Ammoniak bildet und nur (teilweise) einen Vorläufer umfasst. Ganz besonders bevorzugt ist, dass das Reduktionsmittel flüssigen Harnstoff umfasst. Der erfindungsgemäß beschriebene Partikelfilter ist nun so in der Abgasleitung zu positionieren, dass das ankommende und zu reinigende Abgas zusammen mit dem Reduktionsmittel auf die erste Stirnseite des Partikelfilters auftrifft. Das Gemisch aus Reduktionsmittel und Abgas kann nun insbesondere an der ersten Stirnseite eine vollständigere Hydrolyse des Reduktionsmittels realisieren.

In diesem Zusammenhang wird auch als vorteilhaft erachtet, dass die Düse mit einer Einstrahlrichtung positioniert ist, die schräg zur ersten Stirnseite oder der Strömungsrichtung des Abgases orientiert ist. Gegebenenfalls ist eine schräge Anordnung sowohl zur ersten Stirnseite als auch zur Strömungsrichtung besonders vorteilhaft, um eine gleichmäßige Verteilung des Reduktionsmittels auf der ersten Stirnseite und damit mit einem innigen Kontakt zur Hydrolysebeschichtung dort zu realisieren.

Des Weiteren kann in der Abgasleitung ein Oxidationskatalysator vorgesehen sein, der in Strömungsrichtung des Abgases gesehen vor der Düse positioniert ist und eine Distanz zum Partikelfilter von mindestens 150 mm aufweist. Der Oxidationskatalysator dient beispielsweise als Quelle für Stickstoffdioxid (NO₂), das die in dem Partikelfilter eingefangenen Partikel (Ruß) kontinuierlich umsetzen kann und so ein Verblocken der porösen Wände des Partikelfilters verhindert. Zur ausreichenden Verteilung von Oxidationsmittel (NO₂) und Reduktionsmitteln ist der Oxidationskatalysator möglichst mit der hier angegebenen Distanz zum Partikelfilter stromaufwärts in der Abgasleitung zu positionieren.

Ganz besonders bevorzugt findet die Erfindung Einsatz in Kraftfahrzeug, aufweisend eine Verbrennungskraftmaschine und eine Abgasanlage, wobei die Abgasanlage zumindest einen erfindungsgemäß beschriebenen Partikelfilter oder eine Vorrichtung der vorstehend beschriebenen Art aufweist.

Die Erfindung und das technische Umfeld werden nun anhand der Figuren näher erläutert. Die Figuren veranschaulichen besonders bevorzugte Ausführungsvarianten der Erfindung, auf die diese jedoch nicht beschränkt ist. Es zeigen schematisch:
- Fig. 1:: eine perspektivische Darstellung einer Ausführungsvariante eines erfindungsgemäßen Partikelfilters,
- Fig. 2:: einen Längsschnitt durch eine weitere Ausführungsvariante eines erfindungsgemäßen Partikelfilters,
- Fig. 3:: ein Detail einer weiteren Ausführungsvariante des Partikelfilters, und
- Fig. 4:: den Aufbau einer Vorrichtung zur Durchführung des SCR-Verfahrens.

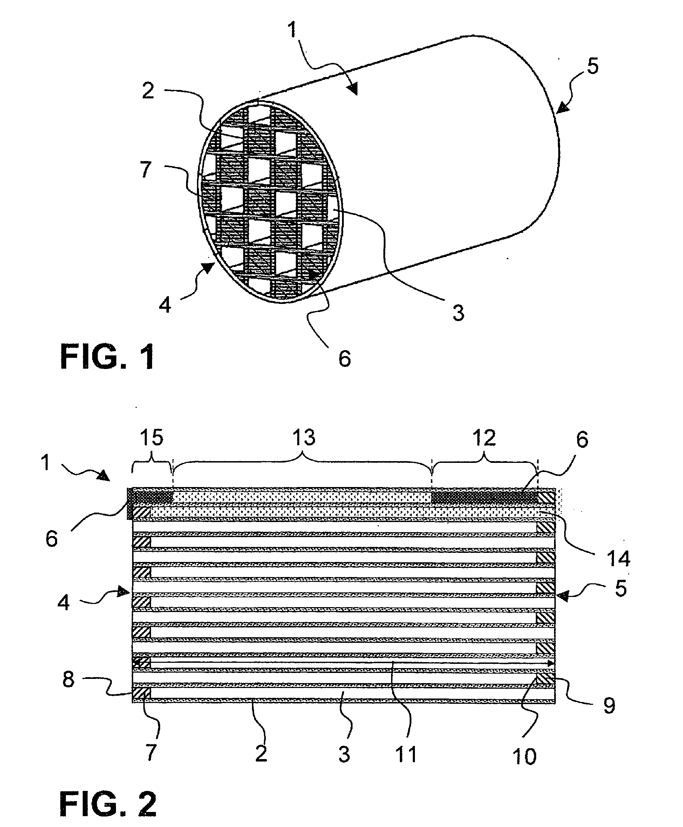

Fig. 1 zeigt in einer perspektivischen Darstellung einen Partikelfilter 1 mit einem runden Querschnitt. Der Partikelfilter 1 ist aus einem keramischen Extrudat mit porösen Wänden 2 gebildet, wobei eine Vielzahl von Kanälen 3 gebildet ist. Der zylindrisch ausgebildete Partikelfilter 1 weist nun eine erste Stirnseite 4 und eine zweite Stirnseite 5 auf, zwischen denen sich gradlinig die Kanäle 5 erstrecken. Die Kanäle 3 sind wechselseitig an den Stirnseiten verschlossen. Hier zu erkennen sind die ersten Verschlussmittel 7 für einen Teil der Kanäle 3. Alle, die erste Stirnseite 4 bildenden Komponenten (Stege der porösen Wände 2 und Frontflächen der ersten Verschlussmittel 7) weisen hier eine Hydrolysebeschichtung 6 auf

Fig. 2 zeigt nun eine weitere Ausgestaltung eines Partikelfilters 1 im Längsschnitt. Zu erkennen sind hierbei die porösen Wände 2, die eine Vielzahl von gradlinig verlaufenden Kanälen 3 bilden. Die benachbarten Kanäle 3 sind wechselseitig an der ersten Stirnseite 4 oder der zweiten Stirnseite mit Verschlussmitteln abgedichtet, so dass das an der ersten Stirnseite 4 eintretende Abgas in den Kanälen 3 zum Durchtritt durch eine poröse Wand 2 gezwungen wird. Im unteren Teilbereich von Fig. 2 ist dabei veranschaulicht, dass die Frontfläche 8 der ersten Verschlussmittel 7 an der ersten Stirnseite 4 in die gleiche Richtung weisen wie die Grundflächen 10 der zweiten Verschlussmittel 9 an der zweiten Stirnseite 5.

Im oberen Teilbereich sind zudem diverse Abschnitte der Kanäle 3 gekennzeichnet. Grundsätzlich weisen die Kanäle 3 eine vorgegebene Länge 11 zwischen den beiden Stirnseiten auf. Wie dies für den ganz oben dargestellten Kanal 3 gezeigt ist, weist der Partikelfilter 1 nahe der ersten Stirnseite 4 eine Hydrolysebeschichtung 6 auf, welche sich über die erste Stirnseite 4 bis hinein in einen dritten Abschnitt 15 des Kanals 3 erstreckt. Daran anschließend ist ein zweiter Abschnitt 13 des Kanals gebildet, in dem eine SCR-Beschichtung 14 vorgesehen ist. Daran anschließend bis hin zum zweiten Verschlussmittel 9 ist ein erster Abschnitt 12 wiederum mit einer Hydrolysebeschichtung 6 vorgesehen. Der benachbart angeordnete Kanal 3, in dem ein erstes Verschlussmittel 7 vorgesehen ist, ist vollständig mit einer SCR-Beschichtung 14 ausgefüllt. Dabei erstreckt sich die SCR-Beschichtung 14 auch über die gesamte zweite Stirnseite 5 außerhalb der Kanäle 3.

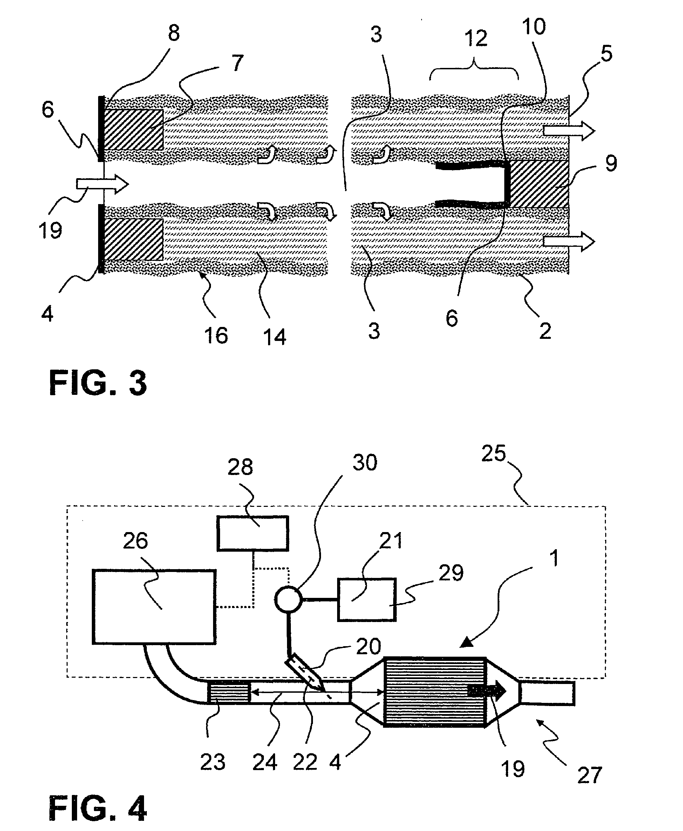

In Fig. 3 ist nun schematisch ein Detail des Partikelfilters 1 für einen zentralen Kanal 3 dargestellt, in dem Abgas in einer vorbestimmten Strömungsrichtung 19 einströmen kann. Links ist dabei der Einströmbereich und rechts der Ausströmbereich dargestellt. Links ist also wieder die erste Stirnseite 4 mit der Hydrolysebeschichtung 6 veranschaulicht, die sich auch über die Frontflächen 8 der ersten Verschlussmittel 7 hinein erstrecken. Das Abgas und gegebenenfalls auch das Reduktionsmittel tritt nun also in den zentral dargestellten Kanal 3 ein, wobei die geradeaus fortfliegenden Bestandteile des Reduktionsmittels gegenüberliegend auf ein zweites Verschlussmittel 9 auftreffen. Die Grundfläche 10 des zweiten Verschlussmittels 9 sowie die Wände 2 in einem ersten Abschnitt 12 unmittelbar angrenzend an das zweite Verschlussmittel 9 sind mit einer Hydrolysebeschichtung 6 ausgeführt, so dass hier gegebenenfalls auftreffende Reduktionsmitteltropfen, wie beispielsweise die Tropfen einer Harnstoff-Wasser-Lösung, hydrolysiert werden können. Das so erzeugte Reduktionsmittel, bzw. Ammoniak, wird gemeinsam mit dem Abgas durch die porösen Wände 2 hindurch gezwungen und erreicht benachbarte Kanäle 3, in denen wiederum eine SCR-Beschichtung 14 vorgesehen ist. Die Kanäle 3 sind hier zusätzlich mit einer Struktur 16 ausgeführt, so dass ein gekrümmter Verlauf der Kanäle 3 realisiert ist.

Fig. 4 zeigt nun schematisch ein Kraftfahrzeug 25, in welchem ein SCR-System integriert ist. Das in der Verbrennungskraftmaschine 26 (von beispielsweise einem Dieselmotor) erzeugte Abgas durchströmt die Abgasanlage 27 in der hier angedeuteten Strömungsrichtung 19. Damit trifft das Abgas zunächst auf einen Oxidationskatalysator 23, der mit einer Distanz 24 von zumindest 150 mm zu dem Partikelfilter 1 positioniert ist. Zwischen dem Oxidationskatalysator 23 und dem Partikelfilter 1 ist zudem eine Düse 20 zum Einleiten von beispielsweise Harnstoff-Wasser-Lösungen vorgesehen. Die Düse 20 ist geneigt und sprüht so mit einer Einstrahlrichtung 22 schräg zur Strömungsrichtung 19 und zur ersten Stirnseite 4 des Partikelfilters 1 Reduktionsmittel 21 ein. Das Reduktionsmittel 21, insbesondere Harnstoff-Wasser-Lösung, ist in einem Tank 29 gelagert und kann, gegebenenfalls auf Anweisung einer mit der Verbrennungskraftmaschine 26 in Verbindung stehenden Steuerung 28 bedarfsgerecht über eine Dosiereinheit 30, beispielsweise nach Art einer Dosierpumpe, über die Düse 20 zugegeben werden.

### Bezugszeichenliste

- 1: Partikelfilter
- 2: Wand
- 3: Kanal
- 4: erste Stirnseite
- 5: zweite Stirnseite
- 6: Hydrolysebeschichtung
- 7: erste Verschlussmittel
- 8: Frontfläche
- 9: zweite Verschlussmittel
- 10: Grundfläche
- 11: Länge
- 12: erster Abschnitt
- 13: zweiter Abschnitt
- 14: SCR-Beschichtung
- 15: dritter Abschnitt
- 16: Struktur
- 17: Vorrichtung
- 18: Abgasleitung
- 19: Strömungsrichtung
- 20: Düse
- 21: Reduktionsmittel
- 22: Einstrahlrichtung
- 23: Oxidationskatalysator
- 24: Distanz
- 25: Kraftfahrzeug
- 26: Verbrennungskraftmaschine
- 27: Abgasanlage
- 28: Steuerung
- 29: Tank
- 30: Dosiereinheit

## Patentansprüche

1. Partikelfilter (1) mit aus porösen Wänden (2) gebildeten Kanälen (3), die zwischen einer ersten Stirnseite (4) und einer zweiten Stirnseite (5) des Partikelfilters (1) verlaufen, wobei die erste Stirnseite (4) außerhalb der Kanäle (3) eine Hydrolysebeschichtung (6) aufweist.

2. Partikelfilter (1) nach Patentanspruch 1, bei dem an der ersten Stirnseite (4) erste Verschlussmittel (7) für Kanäle (3) vorgesehen sind, die mit einer Frontfläche (8) einen Teil der ersten Stirnseite (4) des Partikelfilters (1) bilden und die Frontflächen (8) mit einer Hydrolysebeschichtung (6) ausgeführt sind.

3. Partikelfilter (1) nach Patentanspruch 1 oder 2, bei dem an der zweiten Stirnseite (5) zweite Verschlussmittel (9) für Kanäle (3) vorgesehen sind, die mit einer Grundfläche (10) Kanäle (3) begrenzen und die Grundflächen (10) mit einer Hydrolysebeschichtung (6) ausgeführt sind.

4. Partikelfilter (1) nach einem der vorhergehenden Patentansprüche, bei dem Kanäle (3) eine Länge (11) aufweisen, wobei die Kanäle (3) auf einem ersten Abschnitt (12) der Länge (11) mit einer Hydrolysebeschichtung (6) ausgeführt sind und sich der erste Abschnitt (12) bis an die zweiten Stirnseite (5) des Partikelfilters (1) hin erstreckt.

5. Partikelfilter (1) nach einem der vorhergehenden Patentansprüche, bei dem Kanäle (3) eine Länge (11) aufweisen, wobei die Kanäle (3) auf einem zweiten Abschnitt (13) der Länge (11) mit einer SCR-Beschichtung (14) ausgeführt sind und der zweite Abschnitt (13) zwischen der ersten Stirnseite (4) und der zweiten Stirnseite (5) des Partikelfilters (1) angeordnet ist.

6. Partikelfilter (1) nach einem der vorhergehenden Patentansprüche, bei dem die Kanäle (3) auf einem dritten Abschnitt (15) der Länge (11) mit einer Hydrolysebeschichtung (6) ausgeführt sind und sich der dritte Abschnitt (15) bis an die erste Stirnseite (4) des Partikelfilters (1) hin erstreckt.

7. Partikelfilter (1) nach einem der vorhergehenden Patentansprüche, bei dem wenigstens ein Teil der Kanäle (3) zumindest teilweise gekrümmt oder mit in die Kanäle (3) hineinragenden Strukturen (16) versehen sind.

8. Vorrichtung (17) umfassend zumindest eine Abgasleitung (18), in der ein Abgas in einer Strömungsrichtung (19) hindurch strömen kann, eine Düse (20) zur Einleitung von Ammoniak umfassendem oder bildendem Reduktionsmittel (21), und einen Partikelfilter (1) nach einem der vorhergehenden Patentansprüche, wobei die erste Stirnseite (4) des Partikelfilters (1) hin zur Düse (20) ausgerichtet ist.

9. Vorrichtung (17) nach Patentanspruch 8, bei der die Düse (20) mit einer Einstrahlrichtung (22) positioniert ist, die schräg zur ersten Stirnseite (4) oder der Strömungsrichtung (19) des Abgases orientiert ist.

10. Vorrichtung (17) nach Patentanspruch 8 oder 9, bei der in der Abgasleitung (18) ein Oxidationskatalysator (23) vorgesehen ist, der in Strömungsrichtung (19) des Abgases gesehen vor der Düse (20) positioniert ist und eine Distanz (24) zum Partikelfilter (1) von mindestens 150 Millimeter aufweist.

11. Kraftfahrzeug (25) aufweisend eine Verbrennungskraftmaschine (26) und eine Abgasanlage (27), wobei die Abgasanlage (27) zumindest einen Partikelfilter (1) gemäß einem der Patentansprüche 1 bis 7 oder eine Vorrichtung (17) nach einem der Patentansprüche 8 bis 10 aufweist.

## Claims

1. Particle filter (1) having channels (3) which are formed from porous walls (2), which channels (3) run between a first end side (4) and a second end side (5) of the particle filter (1), wherein the first end side (4) has a hydrolysis coating (6) outside the channels (3).

2. Particle filter (1) according to claim 1, in which first closure means (7) for channels (3) are provided on the first end side (4), which first closure means (7), with a front surface (8), form a part of the first end side (4) of the particle filter (1), and the front surfaces (8) are formed with a hydrolysis coating (6).

3. Particle filter (1) according to claim 1 or 2, in which second closure means (9) for channels (3) are provided on the second end side (5), which second closure means (9), with a base surface (10), delimit channels (3), and the base surfaces (10) are formed with a hydrolysis coating (6).

4. Particle filter (1) according to one of the preceding claims, in which channels (3) have a length (11), wherein the channels (3) are formed with a hydrolysis coating (6) over a first section (12) of the length (11), and the first section (12) extends up to the second end side (5) of the particle filter (1).

5. Particle filter (1) according to one of the preceding claims, in which channels (3) have a length (11), wherein the channels (3) are formed with an SCR-coating (14) over a second section (13) of the length (11) and the second section (13) is arranged between the first end side (4) and the second end side (5) of the particle filter (1).

6. Particle filter (1) according to one of the preceding claims, in which the channels (3) are formed with a hydrolysis coating (6) over a third section (15) of the length (11) and the third section (15) extends up to the first end side (4) of the particle filter (1).

7. Particle filter (1) according to one of the preceding claims, in which at least some of the channels (3) are at least partially curved or provided with structures (16) which project into the channels (3).

8. Device (17) comprising at least one exhaust line (18), in which an exhaust gas can flow through in a flow direction (19), a nozzle (20) for introducing reducing agent (21) which comprises or forms ammonia, and a particle filter (1) according to one of the preceding claims, wherein the first end side (4) of the particle filter (1) is directed toward the nozzle (20).

9. Device (17) according to claim 8, in which the nozzle (20) is positioned with an injection direction (22), which is aligned obliquely with respect to the first end side (4) or the flow direction (19) of the exhaust gas.

10. Device (17) according to claim 8 or 9, in which an oxidation catalytic converter (23) is provided in the exhaust line (18), which oxidation catalytic converter (23) is positioned upstream of the nozzle (20) with respect to the flow direction (19) of the exhaust gas, and is at a distance (24) of at least 150 millimeters from the particle filter (1).

11. Motor vehicle (25) having an internal combustion engine (26) and an exhaust system (27), with the exhaust system (27) having at least one particle filter (1) according to one of claims 1 to 7 or a device (17) according to one of claims 8 to 10.

## Revendications

1. Filtre (1) à particules présentant des canaux (3) formés de parois poreuses (2) et s'étendant entre un premier côté frontal (4) et un deuxième côté frontal (5) du filtre (1) à particules, le premier côté frontal (4) présentant à l'extérieur des canaux (3) un revêtement d'hydrolyse (6).

2. Filtre (1) à particules selon la revendication 1, dans lequel des premiers moyens (7) de fermeture des canaux (3) sont prévus sur le premier côté frontal (4) et forment avec une surface frontale (8) une partie du premier côté frontal (4) du filtre (1) à particules, les surfaces frontales (8) étant réalisées avec un revêtement d'hydrolyse (6).

3. Filtre (1) à particules selon les revendications 1 ou 2, dans lequel des deuxièmes moyens (9) de fermeture des canaux (3) sont prévus sur le deuxième côté frontal (5) et délimitent des canaux (3) avec une surface de base (10), les surfaces de base (10) étant réalisées avec un revêtement d'hydrolyse (6).

4. Filtre (1) à particules selon l'une des revendications précédentes, dans lequel les canaux (3) présentent une longueur (11), les canaux (3) étant réalisés avec un revêtement d'hydrolyse (6) sur une première partie (12) de la longueur (11), la première partie (12) s'étendant jusqu'au deuxième côté frontal (5) du filtre (1) à particules.

5. Filtre (1) à particules selon l'une des revendications précédentes, dans lequel les canaux (3) présentent une longueur (11), les canaux (3) étant réalisés avec un revêtement SCR (14) sur une deuxième partie (13) de la longueur (11), la deuxième partie (13) étant disposée entre le premier côté frontal (4) et le deuxième côté frontal (5) du filtre (1) à particules.

6. Filtre (1) à particules selon l'une des revendications précédentes, dans lequel les canaux (3) sont réalisés avec un revêtement d'hydrolyse (6) sur une troisième partie (15) de la longueur (11), la troisième partie (15) s'étendant jusque sur le premier côté frontal (4) du filtre (1) à particules.

7. Filtre (1) à particules selon l'une des revendications précédentes, dans lequel au moins une partie des canaux (3) est au moins en partie courbée ou dotée de structures (16) qui pénètrent dans les canaux (3).

8. Dispositif (17) comprenant
au moins un conduit (18) pour gaz de combustion dans lequel un gaz de combustion peut s'écouler dans une direction d'écoulement (19), une tuyère (20) d'introduction d'agents de réduction (21) contenant ou formant de l'ammoniac et
un filtre (1) à particules selon l'une des revendications précédentes, le premier côté frontal (4) du filtre (1) à particules étant orienté vers la tuyère (20).

9. Dispositif (17) selon la revendication 8, dans lequel la tuyère (20) est disposée dans une direction d'injection (22) orientée obliquement par rapport au premier côté frontal (4) ou à la direction d'écoulement (19) du gaz de combustion.

10. Dispositif (17) selon les revendications 8 ou 9, dans lequel un catalyseur d'oxydation (23) disposé en amont de la tuyère (20) dans la direction d'écoulement (19) du gaz de combustion et présentant par rapport au filtre (1) à particules une distance (24) d'au moins 150 millimètres est prévu dans le conduit (18) de gaz de combustion.

11. Véhicule automobile (25) présentant un moteur à combustion interne (26) et une installation (27) de gaz de combustion, l'installation (27) de gaz de combustion présentant au moins un filtre (1) à particules selon l'une des revendications 1 à 7 ou un dispositif (17) selon l'une des revendications 8 à 10.
